# EUROPÄISCHE PATENTANMELDUNG

(11) **EP 4 257 645 A1**
(43) Veröffentlichungstag der Anmeldung: **11.10.2023**
(21) Anmeldenummer: 22166572.2
(22) Anmeldetag: 04.04.2022
(51) Int. Cl.: C09D 5/18, C09D 7/45, C09D 7/48, C09D 7/61, C09D 7/40

(54) **WÄSSRIGE ZUBEREITUNGSMASSE UND DEREN VERWENDUNG SOWIE BESCHICHTUNGEN AUS DER WÄSSRIGEN ZUBEREITUNGSMASSE UND BESCHICHTETE WÄRMEDÄMMSTOFFKÖRPER, WÄRMEDÄMMVERBUNDSYSTEME, VORGEHÄNGTE HINTERLÜFTETE FASSADEN UND GEBÄUDE ENTHALTEND DIE BESCHICHTUNG**

(71) Anmelder: DAW SE, 64372 Ober-Ramstadt (DE)
(72) Erfinder: LOEWENSTEIN, Thomas, 64342 Seeheim-Jugenheim (DE); LOHMANN, Thomas, 68526 Ladenburg (DE); UNIK, Mikhail, 69509 Mörlenbach (DE); NSIANGANGO, Paulo Cristo, 69126 Heidelberg (DE); BEFURT, Uwe, 64372 Ober-Ramstadt (DE); GROßKOPF, Jan, 64367 Mühltal (DE); WINGENDER, Patrick, 64380 Roßdorf (DE); TRAUTVETTER, Paul, 64401 Groß-Bieberau (DE)
(74) Vertreter: Metten, Karl-Heinz

(57) **Zusammenfassung**

Die vorliegende Erfindung betrifft eine wässrige Zubereitungsmasse für eine brandhemmende Beschichtung, gebildet aus oder umfassend a) partikuläres Aluminiumhydroxid mit einer Partikelgrößenverteilung D50 im Bereich von 4 bis 100 µm und einer Partikelgrößenverteilung D90 im Bereich von 5,0 bis 120 µm, b) anorganische Füllstoffe und/oder anorganische Pigmente, c) Netz- und/oder Dispergiermittel, d) Wasserglas und e) Wasser. Ferner betrifft die Erfindung eine Beschichtung, erhalten aus der wässrigen Zubereitungsmasse, sowie einen Wärmedämmstoffkörper beschichtet mit der erfindungsgemäßen Beschichtung. Des Weiteren betrifft die Erfindung ein Wärmedämmverbundsystem und eine vorgehängte hinterlüftete Fassade, umfassend den beschichteten Wärmedämmstoffkörper, sowie ein Gebäude enthaltend mindestens das Wärmedämmverbundsystem oder die vorgehängte hinterlüftete Fassade oder den beschichteten Wärmedämmstoffkörper oder di erfindungsgemäße Beschichtung. Schließlich betrifft die Erfindung die Verwendung der wässrigen Zubereitungsmasse zur Herstellung einer Brandschutzbeschichtung sowie der Beschichtung als Brandschutzbeschichtung oder UV-Schutzbeschichtung.

## Beschreibung

Die vorliegende Erfindung betrifft eine wässrige Zubereitungsmasse für eine brandhemmende Beschichtung sowie eine Beschichtung, erhalten aus der erfindungsgemäßen wässrigen Zubereitungsmasse. Ferner betrifft die Erfindung einen beschichteten Wärmedämmstoffkörper, ausgestattet mit einer erfindungsgemäßen Beschichtung, ein Wärmedämmverbundsystem und eine vorgehängte hinterlüftete Fassade, jeweils umfassend den erfindungsgemäßen beschichteten Wärmedämmstoffkörper, sowie ein Gebäude enthaltend das erfindungsgemäße Wärmedämmverbundsystem, die erfindungsgemäße vorgehängte hinterlüftete Fassade, den erfindungsgemäßen beschichteten Wärmedämmstoffkörper oder die erfindungsgemäße Beschichtung. Schließlich betrifft die Erfindung die Verwendung der erfindungsgemäßen wässrigen Zubereitungsmasse zur Herstellung einer Brandschutzbeschichtung oder als Brandschutzbeschichtung.

Mit der Wärmedämmung von Gebäuden kann ein wesentlicher Beitrag zur Reduzierung der Menge an Kohlendioxid, das beim Heizen der Innenräume von Gebäuden entsteht, geleistet werden. Dies betrifft sowohl Neubauten wie auch zu renovierende ältere Gebäude. Für die Wärmedämmung von Fassaden wird vielfach auf geschäumte oder extrudierte Wärmedämmplatten aus Polystyrol oder Polyurethan zurückgegriffen. Diese geschäumten oder extrudierten Wärmedämmplatten sind zur Erhöhung der Gebäudesicherheit regelmäßig mit einem Brandschutz ausgestattet. Allerdings erreicht man z.B. mit marktüblichen geschäumten Polyurethandämmstoffplatten bislang vielfach nur die Brandschutzklasse D oder E gemäß DIN EN 13501-1:2019-05 ("normal entflammbar"). Dies wird z.B. gemäß der EP 2 998 453 B1 dadurch erreicht, dass man bei der Herstellung von Polystyrolwärmedämmelementen schäumbare oder vorgeschäumte Polymerpartikel einsetzt, die vor einem Entschäumungsprozess zumindest teilweise mit einem organischen Bindemittel und einem Flammschutzmittel beschichtet werden. Hierbei ist das organische Bindemittel durch Zugabe von Feuchtigkeit oder Wärme zu aktivieren, so dass ein die Polymerpartikel zumindest teilweise umhüllender Bindemittelfilm ausgebildet wird, mit dessen Hilfe das Flammschutzmittel sich an die Polymerpartikel bindet. Dadurch, dass man auf diese Weise zugleich die Expansion der Polymerpartikel während des Entschäumungsprozesses verringert, soll man zu einem zusammenhängenden luftgefüllten Zwickelvolumen gelangen. Die das Zwickelvolumen begrenzenden Oberflächen im Inneren des flammgeschützten Polymerpartikelschaumkörpers sind sodann mit einer ein anorganisches Bindemittel enthaltenden Beschichtungszusammensetzung zu versehen.

Die Firma Stiferite lobt geschäumte Polyisocyanurat-Dämmplatten mit der Brandklasse B aus. Bei diesen Dämmplatten ist an der Plattenoberseite vermittels einer Polypropylenlage ein Bitumen-Glasvlies befestigt. An der Plattenunterseite liegt ein gesättigter Mineralfaserüberzug vor. Wird nur die Plattenober- oder die -unterseite beschichtet, besteht die Gefahr von Spannungen, die die Dämmstoffplatte verformen können. Die Anbringung eines Gewebes ist regelmäßig relativ aufwendig. Auch lässt ein Gewebe keine versenkbaren Dübel zu. Zudem kann die Dämmplatte nicht geschliffen werden. Etwaige Unebenheiten in der Dämmebene können nur über einen Unterputz ausgeglichen werden, was kostentreibend und zeitaufwendig ist.

Gemäß der EP 3 670 563 A1 sollen solche Polyurethan-Polyisocyanurat-Hartschaumstoffe ein verbessertes intrinsisches Brandverhalten aufweisen, die erhältlich sind durch Umsetzung von A) Polyisocyanaten mit B1) Mischungen aus 50 bis 100 Gew.-% mindestens eines Polyesterpolyols und 0 bis 50 Gew.-% einer oder mehrerer Komponenten aus der Gruppe bestehend aus Polyetherpolyolen und Polyetheresterpolyolen, C) gegebenenfalls Kettenverlängerern und/oder Vernetzungsmitteln in Gegenwart von B2) Flammschutzmitteln, B3) Treibkatalysatoren, B4) PIR-Katalysatoren, B5) Treibmitteln, B6) Schaumstabilisatoren und B7) gegebenenfalls Hilfs- und/oder Zusatzmitteln. Hierbei hat als Polyisocyanat A) eine Mischung mit einer Viskosität von mehr als 300 MPas bei 25°C gemäß (DIN EN ISO 3219:1994) und mit einem Gehalt an hydrolysierbarem Chlor von kleiner 1100 ppm nach 5 Stunden Hydrolyse (5h HC-Wert) eingesetzt zu werden, enthaltend a1) 26 bis 35 Gew.-% Diphenylmethandiisocyanat, a2) 21 bis 28 Gew.-% Polyphenylenpolymethylenpolyisocyanat mit drei aromatischen Ringen, a3) 6 bis 10 Gew.-% Polyphenylenpolymethylenpolyisocyanat mit vier aromatischen Ringen und a4) 33 bis 42 Gew.-% Polyphenylenpolymethylenpolyisocyanat mit fünf oder mehr aromatischen Ringen, wobei sich die Gew.-% der Komponenten a1) bis a4) auf das Gesamtgewicht der Komponenten a1) bis a4) beziehen.

Laut der DE 10 2018 115 893 A1 soll sich mit Anstrichmitteln enthaltend Blähgraphit und gegebenenfalls Borax der Brandschutz von damit beschichteten Verbundwerkstoffen verbessern lassen.

Die WO 2019/129398 A1 beschreibt eine durch den Einsatz von Treibmitteln aufgeblähte poröse Brandschutzplatte, erhalten u.a. aus Wasserglas als Bindemittel und 1 bis 15 Gew.-% Al(OH)₃. Al(OH)₃ soll die Keramisierung der Zusammensetzung bei höheren Temperaturen unterstützen.

Aus der WO 2020/058211 A1 geht ein beschichteter Schaumglasdämmstoff hervor, der Flammschutzeigenschaften aufweisen soll. Die Beschichtung erhält man durch Aushärten einer wässrigen Beschichtungszusammensetzung enthaltend 10 bis 50 Gew.-% Wasserglas, 15 bis 60 Gew.-% eines Härtungsmittels in Form von Aluminiumphosphat und mindestens 15 Gew.-% Wasser.

Die EP 2 762 522 B1 stellt ab auf Dämmelemente zur Schall- und/oder Wärmedämmung einer Gebäudewand oder -decke, die mit einer Beschichtung versehen sind, enthaltend wenigstens ein organisches und/oder anorganisches Bindemittel sowie wenigstens 25 Gew.-% eines wasserhaltigen Füllstoffs in Form von Aluminiumhydroxid, Kaolinit, Ettringit und/oder Titanoxidhydrat, bezogen auf das Trockengesamtgewicht der Ausgangsstoffe der Beschichtung. Mit diesen Dämmelementen soll ein verbesserter Haftverbund zwischen dem Dämmelement und dem jeweiligen Untergrund gelingen. Ein verbesserter Brandschutz soll dadurch erhalten werden, dass man der Beschichtung intumeszierende Substanzen wie Blähgraphit, Borate, Melaminverbindungen und/oder Phosphorverbindungen zusetzt.

Angesichts des vorliegenden Stands der Technik ist es wünschenswert, Dämmstoffsysteme mit ausgeprägtem Brandschutz auf präparativ einfache und zuverlässige Weise zugänglich zu machen.

Der vorliegenden Erfindung hat daher die Aufgabe zugrunde gelegen, Wärmedämmungen verfügbar zu machen, die nicht mit den Nachteilen des Stands der Technik ausgestattet sind. Insbesondere lag der Erfindung die Aufgabe zugrunde, bei der Wärmedämmung von Gebäuden auf Dämmmaterialien zurückgreifen zu können, die eine verbesserte Handhabungssicherheit bis zur Anbringung an einer Fassade und dem Auftrag einer Putzschicht gewährleisten und insbesondere einen verbesserten Brandschutz liefern. Ferner lag der Erfindung insbesondere die Aufgabe zugrunde, Dämmmaterialien verfügbar zu haben, die aus brandschutztechnischer Sicht auf der Baustelle ohne Einschränkungen verarbeitet und gehandhabt werden können.

Demgemäß wurde eine wässrige Zubereitungsmasse für eine brandhemmende Beschichtung, insbesondere für eine brandhemmende Beschichtung für einen Wärmedämmkörper für Gebäudewandungen, gefunden, gebildet aus oder umfassend
a) partikuläres Aluminiumhydroxid,
   insbesondere in einer Menge im Bereich von 15,0 bis 60,0 Gew.-%, bezogen auf das Gesamtgewicht der Zubereitungsmasse,
   wobei das Aluminiumhydroxid eine Partikelgrößenverteilung D50 im Bereich von 4 bis 100 µm, bevorzugt im Bereich von 5 bis 80 µm, besonders bevorzugt im Bereich von 7,5 bis 75 µm, und
   eine Partikelgrößenverteilung D90 im Bereich von 5,0 bis 120 µm, bevorzugt im Bereich von 8,0 bis 115 µm, besonders bevorzugt im Bereich von 60 bis 110 µm, sowie aufweist,
   vorzugsweise eine Partikelgrößenverteilung D10 im Bereich von 0,5 bis 90 µm, bevorzugt im Bereich von 1,0 bis 60 µm, besonders bevorzugt im Bereich von 1,5 bis 50 µm, und
b) mindestens einen anorganischen Füllstoff und/oder mindestens ein anorganisches Pigment,
c) mindestens ein Netz- und/oder Dispergiermittel, insbesondere umfassend Salze von Phosphonsäuren oder Phosphonsäurederivaten,
d) Wasserglas und
e) Wasser.

Die Komponente a) kann in einer Ausführungsform neben partikulärem Aluminiumhydroxid ferner Magnesiumhydroxid, Ittringit, Calciumhydroxid, Titandioxidhydrat oder eine beliebige Mischung der vier vorangehend genannten Komponenten enthalten, wobei die Kombination Aluminiumhydroxid und Magnesiumhydroxid bevorzugt ist. Insbesondere mit dieser Kombination kann ein geeigneter Brandschutz über einen nochmals längeren Zeitraum bewerkstelligt werden.

Die Komponente a), insbesondere das partikuläre Aluminiumhydroxid oder die Kombination aus Aluminiumhydroxid und Magnesiumhydroxid, ganz bevorzugt Aluminiumhydroxid, liegt in den erfindungsgemäßen wässrigen Zubereitungsmassen bevorzugt in einer Menge im Bereich von 20,0 bis 57,5 Gew.-% und besonders bevorzugt 25,0 bis 52,5 Gew.- %, jeweils bezogen auf das Gesamtgewicht der Zubereitungsmasse, vor.

Besonders bevorzugt liegt die Komponente a), insbesondere das partikuläre Aluminiumhydroxid, in den erfindungsgemäßen wässrigen Zubereitungsmassen mit einer Partikelgröße im Bereich von 0,1 bis 120 µm, bevorzugt mit einer Partikelgröße im Bereich von 0,2 bis 110 µm und besonders bevorzugt mit einer Partikelgröße im Bereich von 0,3 bis 100 µm, vor. In einer Ausführungsform kann z.B. vorgesehen sein, dass in der erfindungsgemäßen Zubereitungsmasse im Wesentlichen ausschließlich, insbesondere ausschließlich, solche Aluminiumhydroxid-Partikel mit einer Partikelgröße im Bereich von 0,1 bis 120 µm, bevorzugt mit einer Partikelgröße im Bereich von 0,2 bis 110 µm und besonders bevorzugt mit einer Partikelgröße im Bereich von 0,3 bis 100 µm vorliegen.

In einer geeigneten Ausführungsform der erfindungsgemäßen wässrigen Zubereitungsmasse umfasst die Komponente a), insbesondere das Aluminiumhydroxid, Partikel mit einer Partikelgröße im Bereich von 1 bis 20 µm und im Bereich von größer 20 bis 40 µm und im Bereich von größer 40 bis 60 µm. In einer weiteren geeigneten Ausführungsform umfasst die Komponente a), insbesondere das Aluminiumhydroxid, Partikel mit einer Partikelgröße im Bereich von 1 bis 20 µm und im Bereich von größer 20 bis 40 µm und im Bereich von größer 40 bis 60 µm und im Bereich von größer 60 bis 80 µm. In einer weiteren geeigneten Ausführungsform umfasst das Aluminiumhydroxid Partikel mit einer Partikelgröße im Bereich von 1 bis 20 µm und im Bereich von größer 20 bis 40 µm und im Bereich von größer 40 bis 60 µm und im Bereich von größer 60 bis 80 µm und im Bereich von größer 80 bis 100 µm.

In einer ebenfalls geeigneten weiteren Ausführungsform umfasst das Aluminiumhydroxid Partikel mit einer Partikelgröße im Bereich von 60 bis 80 µm und im Bereich von größer 80 bis 100 µm.

In einer bevorzugten Ausführungsform besteht oder umfasst, insbesondere umfasst, die wässrige Zubereitungsmasse für eine brandhemmende Beschichtung, insbesondere für eine brandhemmende Beschichtung für einen Wärmedämmkörper für Gebäudewandungen,
a) partikuläres Aluminiumhydroxid in einer Menge im Bereich von 15,0 bis 60,0 Gew.-%, bezogen auf das Gesamtgewicht der Zubereitungsmasse,
   wobei das Aluminiumhydroxid Partikel mit einer Partikelgröße im Bereich von 1 bis 20 µm und im Bereich von größer 20 bis 40 µm und im Bereich von größer 40 bis 60 µm umfasst oder hieraus besteht sowie gegebenenfalls Partikel mit einer Partikelgröße im Bereich von größer 60 bis 80 µm und Partikel mit einer Partikelgröße im Bereich von größer 80 bis 100 µm, umfasst oder hieraus besteht,
   wobei das Aluminiumhydroxid eine Partikelgrößenverteilung D50 im Bereich von 4 bis 100 µm, bevorzugt im Bereich von 5 bis 80 µm,
   eine Partikelgrößenverteilung D10 im Bereich von 0,5 bis 90 µm, bevorzugt im Bereich von 1,0 bis 60 µm, und
   eine Partikelgrößenverteilung D90 im Bereich von 5,0 bis 120 µm, bevorzugt im Bereich von 8,0 bis 115 µm, aufweist,
b) mindestens einen anorganischen Füllstoff und/oder mindestens ein anorganisches Pigment, insbesondere mindestens einen anorganischen Füllstoff,
c) mindestens ein Netz- und/oder Dispergiermittel, umfassend Alkalisalze von Phosphonsäuren oder Phosphonsäurederivaten,
d) Wasserglas und
e) Wasser.

In einer weiteren bevorzugten Ausführungsform besteht oder umfasst, insbesondere umfasst, die wässrige Zubereitungsmasse für eine brandhemmende Beschichtung, insbesondere für eine brandhemmende Beschichtung für einen Wärmedämmkörper für Gebäudewandungen,
a) partikuläres Aluminiumhydroxid in einer Menge im Bereich von 20,0 bis 57,5 Gew.-%, bezogen auf das Gesamtgewicht der Zubereitungsmasse,
   wobei das Aluminiumhydroxid Partikel mit einer Partikelgröße im Bereich von 1 bis 20 µm und im Bereich von größer 20 bis 40 µm und im Bereich von größer 40 bis 60 µm umfasst sowie gegebenenfalls Partikel mit einer Partikelgröße im Bereich von größer 60 bis 80 µm und Partikel mit einer Partikelgröße im Bereich von größer 80 bis 100 µm umfasst,
   wobei das Aluminiumhydroxid eine Partikelgrößenverteilung D50 im Bereich von 5 bis 35 µm, bevorzugt 8 bis 20 µm,
   eine Partikelgrößenverteilung D10 im Bereich von 0,5 bis 30 µm, bevorzugt 1,0 bis 10 µm, und
   eine Partikelgrößenverteilung D90 im Bereich von 8,0 bis 70 µm, bevorzugt im Bereich von 15 bis 40 µm, aufweist,
b) mindestens einen anorganischen Füllstoff und/oder mindestens ein anorganisches Pigment, insbesondere mindestens einen anorganischen Füllstoff,
c) mindestens ein Netz- und/oder Dispergiermittel, umfassend Alkalisalze von Phosphonsäuren und/oder Phosphonsäurederivaten,
d) Wasserglas und
e) Wasser.

Wasserglas liegt in den erfindungsgemäßen wässrigen Zubereitungsmassen (Komponente d)), insbesondere in einer Menge (Feststoffanteil) im Bereich von 4,0 bis 25,0 Gew.-%, bevorzugt 6,0 bis 20,0 Gew.-% und besonders bevorzugt im Bereich von 8,0 bis 15,0 Gew.-%, vor, jeweils bezogen auf das Gesamtgewicht der Zubereitungsmasse. Durch den Zusatz von Wasserglas kann man die brandhemmenden Eigenschaften der aus den erhältlichen Beschichtungen ebenso wie deren Härte bzw. mechanische Stabilität nochmals steigern. Allerdings wurde überraschend gefunden, dass bei einem zu hohen Anteil von Wasserglas, insbesondere oberhalb von 30 Gew.-%, die brandhemmende Eigenschaft vom Al(OH)₃ abnimmt und dass bei zu niedrigen Gehalten an Wasserglas, insbesondere kleiner 3 Gew.-%, die mechanische Stabilität der Beschichtungen leidet. Als Wasserglas kommen in den erfindungsgemäßen wässrigen Zubereitungsmassen Kalium-, Natrium- oder Lithiumwasserglas sowie Mischungen dieser Wassergläser in Betracht. Besonders bevorzugt ist Kaliumwasserglas. Die Komponente e) kann neben Wasserglas auch Kieselsol enthalten.

Besonders geeignete erfindungsgemäße wässrige Zubereitungsmassen umfassen demgemäß auch
a) partikuläres Aluminiumhydroxid und gegebenenfalls Magnesiumhydroxid, Ittringit, Calciumhydroxid, Titandioxidhydrat oder eine beliebige Mischung der vier vorangehend genannten Komponenten, bevorzugt Aluminiumhydroxid, besonders bevorzugt Aluminiumhydroxid und kein Magnesiumhydroxid,
   in einer Menge im Bereich von 15,0 bis 60,0 Gew.-%, bevorzugt 20,0 bis 57,5 Gew.-% und besonders bevorzugt 25,0 bis 52,5 Gew.-%, jeweils bezogen auf das Gesamtgewicht der Zubereitungsmasse,
   wobei das Aluminiumhydroxid Partikel mit einer Partikelgröße im Bereich von 1 bis 20 µm, Partikel mit einer Partikelgröße im Bereich von größer 20 bis 50 µm und Partikel mit einer Partikelgröße im Bereich von größer 50 bis 75 µm umfasst,
   wobei das Aluminiumhydroxid eine Partikelgrößenverteilung D50 im Bereich von 4 bis 100 µm, insbesondere im Bereich von 5 bis 80 µm, eine Partikelgrößenverteilung D10 im Bereich von 0,5 bis 90 µm, insbesondere im Bereich von 1,0 bis 50 µm und eine Partikelgrößenverteilung D90 im Bereich von 5,0 bis 120 µm, insbesondere im Bereich von 8,0 bis 110 µm, aufweist,
b) mindestens einen anorganischen Füllstoff und/oder mindestens ein anorganisches Pigment, insbesondere mindestens einen anorganischen Füllstoff,
c) mindestens ein Netz- und/oder Dispergiermittel, umfassend Salze von Phosphonsäuren und/oder Phosphonsäurederivaten,
d) Wasserglas und
e) Wasser.

In einer weiterhin besonders geeigneten Ausführungsform umfasst die wässrige Zubereitungsmasse für eine brandhemmende Beschichtung,
a) partikuläres Aluminiumhydroxid in einer Menge im Bereich von 15,0 bis 60,0 Gew.-%, bezogen auf das Gesamtgewicht der Zubereitungsmasse,
   wobei das Aluminiumhydroxid Partikel mit einer Partikelgröße im Bereich von 1 bis 20 µm, Partikel mit einer Partikelgröße im Bereich von größer 20 bis 50 µm und Partikel mit einer Partikelgröße im Bereich von größer 50 bis 75 µm umfasst,
   wobei das Aluminiumhydroxid eine Partikelgrößenverteilung D50 im Bereich von 4 bis 100 µm, eine Partikelgrößenverteilung D10 im Bereich von 0,5 bis 90 µm und eine Partikelgrößenverteilung D90 im Bereich von 5,0 bis 120 µm aufweist,
b) mindestens einen anorganischen Füllstoff und/oder mindestens ein anorganisches Pigment, insbesondere mindestens einen anorganischen Füllstoff,
c) mindestens ein Netz- und/oder Dispergierhilfsmittel, umfassend Alkalisalze von Phosphonsäuren und/oder Phosphonsäurederivaten,
d) 6,0 bis 20,0 Gew.-% (Feststoff), bevorzugt im Bereich von 8,0 bis 15,0 Gew.-%, Wasserglas, jeweils bezogen auf das Gesamtgewicht der Zubereitungsmasse.
e) Wasser.

In einer weiteren besonders bevorzugten Ausführungsform umfasst die erfindungsgemäße wässrige Zubereitungsmasse für eine brandhemmende Beschichtung
a) partikuläres Aluminiumhydroxid in einer Menge im Bereich von 20,0 bis 57,5 Gew.-%, bezogen auf das Gesamtgewicht der Zubereitungsmasse,
   wobei das Aluminiumhydroxid Partikel mit einer Partikelgröße im Bereich von 1 bis 10 µm, Partikel mit einer Partikelgröße im Bereich von größer 10 bis 30 µm und Partikel mit einer Partikelgröße im Bereich von größer 30 bis 50 µm umfasst,
   wobei das Aluminiumhydroxid eine Partikelgrößenverteilung D50 im Bereich von 5 bis 20 µm, eine Partikelgrößenverteilung D10 im Bereich von 1,0 bis 10 µm und eine Partikelgrößenverteilung D90 im Bereich von 8,0 bis 50 µm, aufweist,
b) mindestens einen anorganischen Füllstoff und/oder mindestens ein anorganisches Pigment, insbesondere mindestens einen anorganischen Füllstoff,
c) mindestens ein Netz- und/oder Dispergierhilfsmittel, umfassend Alkalisalze von Phosphonsäuren und/oder Phosphonsäurederivaten,
d) 8,0 bis 15,0 Gew.-% (Feststoff), bezogen auf das Gesamtgewicht der Zubereitungsmasse, Wasserglas und
e) Wasser.

Es hat sich überraschend gezeigt, dass mit der Verwendung von kleinteiligen Aluminiumhydroxid-Partikeln eine besonders wirksame Reduzierung der Brandgefahr einhergeht. Hierbei haben vorzugsweise Aluminiumhydroxid-Partikel mit einer Partikelgröße sowohl im Bereich von 1 bis 20 µm, als auch im Bereich von größer 20 bis 50 µm und im Bereich von größer 50 bis 75 µm oder alternativ Partikel mit einer Partikelgröße sowohl im Bereich von 1 bis 10 µm, als auch im Bereich von größer 10 bis 30 µm und im Bereich von größer 30 bis 50 µm in den Zubereitungsmassen oder alternativ Partikel mit einer Partikelgröße sowohl im Bereich von 1 bis 20 µm, als auch im Bereich von größer 20 bis 40 µm und im Bereich von größer 40 bis 60 µm sowie gegebenenfalls auch im Bereich von größer 60 bis 80 µm und im Bereich von größer 80 bis 100 µm in den Zubereitungsmassen vorzuliegen. Allerdings können die erfindungsgemäßen wässrigen Zubereitungsmassen auch Aluminiumhydroxid-Partikel mit einer Partikelgröße größer 50 µm, z.B. im Bereich von größer 50 bis 100 µm, bevorzugt im Bereich von größer 50 bis 80 µm, bzw. größer 60 µm, z.B. im Bereich von größer 60 bis 120 µm, bevorzugt im Bereich von größer 60 bis 100 µm, bzw. größer 75 µm, z.B. im Bereich von größer 75 bis 120 µm, bevorzugt im Bereich von größer 75 bis 100 µm enthalten.

Das Aluminiumhydroxid weist insbesondere maximal 10,0 Gew.-%, bevorzugt maximal 5,0 Gew.-% und besonders bevorzugt 0 Gew.-% an Partikeln mit einer Partikelgröße größer 120 µm, bevorzugt an Partikeln mit einer Partikelgröße größer 100 µm, besonders bevorzugt an Partikeln mit einer Partikelgröße größer 80 µm und insbesondere an Partikeln mit einer Partikelgröße größer 50 µm oder 60 µm auf, jeweils bezogen auf das Gesamtgewicht an Aluminiumhydroxid. Die D10-, D50- und D90-Werte können gemäß DIN ISO 9276-1:2004-09 (Darstellung der Ergebnisse von Partikelgrößenanalysen - Teil 1: grafische Darstellung) und ISO 9276-2:2014-05 (Darstellung der Ergebnisse von Partikelgrößenanalysen - Teil 2: Berechnung von mittleren Partikelgrößen/durchmessern und Momenten aus Partikelgrößenverteilungen) ermittelt werden.

Ferner hat sich überraschend herausgestellt, dass bereits die erfindungsgemäßen Beschichtungen als solche, d.h. insbesondere auch durch die gleichzeitige Anwesenheit von Komponente a), insbesondere Aluminiumhydroxid, und Wasserglas ausreichend undurchlässig für UV-Licht sind, so dass die beschichteten geschäumten Dämmmaterialien, insbesondere geschäumte Polyurethan- und Polyisocyanuratdämmmaterialien auch bei längerer und/oder intensiver Exposition von Sonnenlicht keinen Schaden nehmen. Durch die zusätzliche Anwesenheit von Pigmenten wie Titandioxid, Zinkoxid, Zinksulfid und/oder Bariumsulfat, insbesondere Titandioxid, kann dieser UV-Schutz nochmals erhöht werden.

Als geeignete Netz- und/oder Dispergiermittel greift man insbesondere auf die Salze von Phosphonsäuren und/oder von Phosphonsäurederivaten, umfassend z.B. sogenannte modifizierte Phosphonsäuren, zurück. Besonders bevorzugt sind die Alkalisalze von Phosphonsäuren, z.B. das Natriumsalz der Phosphonsäure. Geeignet sind auch Polyphosphate, z.B. Natriumpolyphosphat. Diese Netz- und/oder Dispergiermittel können dazu beitragen, Sedimentationsprozesse in den erfindungsgemäßen wässrigen Zubereitungsmassen, insbesondere auch bei längeren Standzeiten, hinauszuzögern. Das Netz- und/oder Dispergiermittel liegt in den erfindungsgemäßen wässrigen Zubereitungsmassen bevorzugt in einer Menge im Bereich von 0,01 bis 1,5 Gew.-% und besonders bevorzugt im Bereich von 0,05 bis 1,2 Gew.-%, jeweils bezogen auf das Gesamtgewicht der Zubereitungsmasse, vor.

In den erfindungsgemäßen wässrigen Zubereitungsmassen kann auch mindestens ein organisches Bindemittel (Komponente f)), insbesondere auf Kunstharz- oder Silikonharzbasis, zugegen sein. Der Gehalt an organischem Bindemittel (Feststoffanteil) liegt dabei bevorzugt im Bereich von 0,0 bis 4,0 Gew.-% und besonders bevorzugt im Bereich von 0,0 bis 1,0 Gew.-%, jeweils bezogen auf das Gesamtgewicht der Zubereitungsmasse.

Des Weiteren können die erfindungsgemäßen wässrigen Zubereitungsmassen alternativ oder zusätzlich mindestens ein Rheologiemodifizierungsmittel (Komponente g)) enthalten. Bevorzugt sind anorganische Rheologiemodifizierungsmittel. Hierunter sind Schichtsilikate besonders bevorzugt, wobei insbesondere zurückgegriffen wird auf Smektit-Schichtsilikate. Geeignete Smektit-Schichtsilikate umfassen Montmorillonit, Beidellit, Nontronit, Saponit, Hectorit und beliebige Mischungen dieser Schichtsilikate. Geeignete Rheologiemodifizierungsmittel umfassen auch organisch modifizierte Schichtsilikate. Die Menge an Rheologiemodifizierungsmittel liegt bevorzugt im Bereich von 0,01 bis 2,0 Gew.-%, besonders bevorzugt im Bereich von 0,1 bis 1,5 Gew.-%, jeweils bezogen auf das Gesamtgewicht der erfindungsgemäßen wässrigen Zubereitungsmasse.

Erfindungsgemäße wässrige Zubereitungsmassen können ferner mindestens ein Additiv enthalten (Komponente h)). Als Additive kommen bevorzugt solche zum Einsatz, die ausgewählt sind aus der Gruppe bestehend aus UV-Schutzmitteln, Wasserenthärtern, Säuren, Laugen, Puffersystemen, insbesondere Pufferlösungen zum Einstellen des pH-Wertes, Konservierungsmitteln, Entschäumern, Haftvermittlern und beliebigen Mischungen hiervon. Die Menge an Additiven liegt bevorzugt unterhalb von 5 Gew.-%, insbesondere unterhalb von 3 Gew.-%, jeweils bezogen auf das Gesamtgewicht der erfindungsgemäßen wässrigen Zubereitungsmasse. Für die erfindungsgemäßen wässrigen Zubereitungsmassen wird bevorzugt auf anorganische Additive zurückgegriffen.

Die Menge an anorganischem Füllstoff in den erfindungsgemäßen wässrigen Zubereitungsmassen liegt im Allgemeinen im Bereich von 3,0 bis 35,0 Gew.-% und bevorzugt im Bereich von 4,0 bis 30,0 Gew.-%, jeweils bezogen auf das Gesamtgewicht der Zubereitungsmasse. Die anorganischen Füllstoffe sind oder umfassen insbesondere calcitische Füllstoffe, silikatische Füllstoffe oder beliebige Mischungen hiervon.

Geeignete calcitische Füllstoffe können ausgewählt werden aus der Gruppe bestehend aus Calciumcarbonat, Dolomit, Calcit, Aragonite und beliebigen Mischungen hiervon. Unter den silikatischen Füllstoffen sind solche bevorzugt, die ausgewählt sind aus der Gruppe bestehend aus Quarziten, Schichtsilikaten, insbesondere Glimmer, Feldspaten, Kaolin, Vulkaniten, Kieselerden wie Kieselgur und/oder Diatomeenerden, und beliebigen Mischungen hiervon. Die silikatischen Füllstoffe wie Glimmer tragen insbesondere auch zu einer größeren mechanischen Stabilität der aus den erfindungsgemäßen wässrigen Zubereitungsmassen erhältlichen Beschichtungen bei.

Ferner können die anorganischen Füllstoffe poröse partikuläre anorganische Füllstoffmaterialien umfassen. Diese sind insbesondere ausgewählt aus der Gruppe bestehend aus Blähton, Blähschiefer, insbesondere expandiertes Glimmerschiefergranulat, Hohlglaskugeln, Hohlkeramikkugeln, Mineralblähglas, insbesondere geschäumtes Blähglas und/oder Blähglasgranulate, Blähperlite, Blähglimmer, insbesondere geblähtes oder geschäumtes Vermiculit, Tuff, Bims und beliebigen Mischungen hiervon.

Für viele Anwendungen stellt sich ein besonders guter Brandschutz insbesondere auch dann ein, wenn das Gewichtsverhältnis von anorganischem Füllstoff, anorganischem Pigment und Komponente a), insbesondere partikulärem Aluminiumhydroxid, (kombiniert) zu Wasserglas (Trockengewicht) in den erfindungsgemäßen wässrigen Zubereitungsmassen im Bereich von 2,0 bis 10, bevorzugt im Bereich von 3,0 bis 7,5 liegt.

Die erfindungsgemäßen wässrigen Zubereitungsmassen können darüber hinaus auch Calciumsulfat, insbesondere Calciumsulfat-Dihydrat und/oder Anhydrit, Kalkhydrat, Zement oder Mischungen dieser Komponenten enthalten. Derartige Zubereitungsmassen eignen sich insbesondere auch als Spachtelmassen.

Besonders geeignete erfindungsgemäße wässrige Zubereitungsmassen sind gebildet aus oder enthalten in einer zweckmäßigen Ausführungsform
15,0 bis 60,0 Gew.-% an Komponente a),
3,0 bis 35,0 Gew.-% an Komponente b),
0,01 bis 1,5 Gew.-% an Komponente c),
4,0 bis 25,0 Gew.-% (Feststoffanteil) an Komponente d),
10,0 bis 55,0 Gew.-% an Komponente e),
0,0 bis 4,0 Gew.-% (Feststoffanteil) an Komponente f),
0,01 bis 2,0 Gew.-% an Komponente g),
0,0 bis 5,0 Gew.-% an Komponente h), wobei die Mengenangaben sich jeweils auf das Gesamtgewicht der Zubereitungsmasse beziehen und wobei die die Zubereitungsmasse bildenden Komponenten stets 100,00 Gew.-% ergeben.

Bevorzugte erfindungsgemäße wässrige Zubereitungsmassen sind gebildet aus oder enthalten in einer zweckmäßigen Ausführungsform
20,0 bis 57,5 Gew.-% an Komponente a),
4,0 bis 30,0 Gew.-% an Komponente b),
0,01 bis 1,5 Gew.-% an Komponente c),
6,0 bis 20,0 Gew.-% (Feststoffanteil) an Komponente d),
20,0 bis 40,0 Gew.-% an Komponente e),
0,0 bis 1,0 Gew.-% (Feststoffanteil) an Komponente f),
0,01 bis 2,0 Gew.-% an Komponente g),
0,1 bis 5 Gew.-% an Komponente h), wobei die Mengenangaben sich jeweils auf das Gesamtgewicht der Zubereitungsmasse beziehen und wobei die die Zubereitungsmasse bildenden Komponenten stets 100,00 Gew.-% ergeben.

Besonders bevorzugte erfindungsgemäße wässrige Zubereitungsmassen enthalten in einer zweckmäßigen Ausführungsform
25,0 bis 52,5 Gew.-% an Komponente a),
4,0 bis 30,0 Gew.-% an Komponente b),
0,05 bis 1,2 Gew.-% an Komponente c),
8,0 bis 15,0 Gew.-% (Feststoffanteil) an Komponente d),
25,0 bis 35,0 Gew.-% an Komponente e),
0,0 bis 1,0 Gew.-% (Feststoffanteil) an Komponente f),
0,1 bis 1,5 Gew.-% an Komponente g),
0,1 bis kleiner 3 Gew.-% an Komponente h), wobei die Mengenangaben sich jeweils auf das Gesamtgewicht der Zubereitungsmasse beziehen und wobei die die Zubereitungsmasse bildenden Komponenten stets 100,00 Gew.-% ergeben.

Die der Erfindung zugrunde liegende Aufgabe wird des Weiteren gelöst durch eine Beschichtung, erhalten oder erhältlich aus einer erfindungsgemäßen wässrigen Zubereitungsmasse.

Der Anteil an organischen Bestandteilen, bezogen auf das Gesamtgewicht der Beschichtung, ist darin bevorzugt kleiner oder gleich 0,5 Gew.-% und besonders bevorzugt kleiner oder gleich 0,1 Gew.-% und liegt insbesondere bei 0 Gew.-%.

Ein hinreichender Brandschutz wird insbesondere schon mit erfindungsgemäßen Beschichtungen erreicht, die über eine durchschnittliche Trockenschichtdicke, bestimmt gemäß DIN EN ISO 2808 (Dezember 2019), im Bereich von 50 µm bis 400 µm, bevorzugt im Bereich von 70 µm bis 350 µm, verfügen. Demgemäß konnte selbst für dünne Schichten eine brandhemmende Wirkung festgestellt werden. Ohne an eine Theorie gebunden zu sein, wird vermutet, dass dies maßgeblich auf zwei Effekte zurückgeht. Zum einen wird durch die Beschichtung eine physikalische Abschirmung des brennbaren geschäumten Dämmmaterials vor Flammen bewirkt. Zum anderen wird durch die sehr feinteilig vorliegende Komponente a), insbesondere Aluminiumhydroxid, in der Beschichtung erreicht, dass bei Einwirkung von Hitze Wasser frühzeitig und langanhaltend freigesetzt wird. Dieser Vorgang ist endotherm, entzieht dem System also Wärme. Außerdem hat Wasser eine hohe Wärmekapazität und nimmt somit viel Wärmeenergie auf. Weiterhin werden die brennbaren Bestandteile der Gasphase durch das Wasser verdünnt, so dass eine chemische Verbrennungsreaktion gehindert wird. Auf diese Weise kann das Erreichen einer materialspezifischen Zündtemperatur zeitlich herausgezögert werden. Obige Prozesse werden überraschender Weise durch die Anwesenheit von Wasserglas nochmals gesteigert.

Ein besonders effektiver Brandschutz geht auch mit solchen erfindungsgemäßen Beschichtungen einher, in denen das Aluminiumhydroxid ein Flächengewicht im Bereich von 40 bis 300 g/m², bevorzugt im Bereich von 50 bis 250 g/m² oder 150 bis 250 g/m², aufweist. Geeignete erfindungsgemäße Beschichtungen sind darüber hinaus mit einem Flächengewicht an trockenem Feststoff im Bereich von 120 bis 500 g/m², bevorzugt im Bereich von 150 bis 400 g/m², ausgestattet.

Zur Erreichung eines effizienten Brandschutzes kann ebenfalls vorgesehen sein, dass die erfindungsgemäßen Beschichtungen über eine Pigment-Volumen-Konzentration kleiner oder gleich 92 % verfügen, ermittelt gemäß BASF Handbuch Lackiertechnik, A. Goldschmidt, H.-J. Streitberger, 2002, Vincentz Verlag.

Die der Erfindung zugrunde liegende Aufgabe wird des Weiteren gelöst durch einen beschichteten Wärmedämmstoffkörper, insbesondere eine beschichtete Wärmedämmstoffplatte, umfassend einen, insbesondere geschäumten oder extrudierten, Wärmedämmstoffkörper, insbesondere Wärmedämmstoffplatte, mit einer, insbesondere offenporigen, beschichtbaren Oberfläche sowie mindestens eine erfindungsgemäße Beschichtung auf dieser beschichtbaren Oberfläche. Auf den erfindungsgemäßen Wärmedämmstoffkörpern liegt die erfindungsgemäße Beschichtung zweckmäßiger Weise auf derjenigen Seite vor, die die Außenseite bildet, d.h. diejenige Seite, die regelmäßig mit mindestens einer Putzschicht versehen wird. Hierbei kann für den Wärmedämmstoffkörper bevorzugt auf geschäumtes Polyurethan, geschäumtes Polyisocyanurat, geschäumtes Polystyrol, extrudiertes Polystyrol, Phenolharz, Naturdämmstoffkörper oder Kombinationen hiervon zurückgegriffen werden. Ganz besonders bevorzugt ist geschäumtes Polyurethan und/oder geschäumtes Polyisocyanurat, wobei geschäumtes Polyisocyanurat besonders bevorzugt ist, insbesondere jeweils mit einer offenporigen, beschichtbaren Oberfläche. Diese erfindungsgemäßen beschichteten Wärmedämmstoffkörper zeichnen sich auch dadurch aus, dass die Beschichtungen über eine sehr ausgeprägte Haftung verfügen. Eine offenporige Oberfläche kann z.B. durch Sägen eines geschäumtes Polyurethan- bzw. eines geschäumtes Polyisocyanuratblocks erhalten werden.

Unter den erfindungsgemäßen beschichteten Wärmedämmstoffkörper sind auch solche bevorzugt, die auf der die erfindungsgemäße Beschichtung aufweisenden Seite keine Kaschierung aufweisen. Dies trifft insbesondere auch auf die beschichteten Wärmedämmstoffkörper auf Basis von geschäumtem Polyurethan und/oder geschäumtem Polyisocyanurat, bevorzugt auf Basis von geschäumtem Polyisocyanurat, zu, und ganz besonders bevorzugt auf beschichtete Wärmedämmstoffkörper auf Basis von geschäumtem Polyurethan und/oder geschäumtem Polyisocyanurat, bevorzugt auf Basis von geschäumtem Polyisocyanurat, bei denen die Beschichtung auf einer offenporigen Oberfläche angebracht ist.

Der erfindungsgemäße Wärmedämmstoffkörper stellt bevorzugt eine einseitig oder beidseitig, insbesondere einseitig, mit der erfindungsgemäßen Beschichtung beschichtete Wärmedämmstoffplatte, insbesondere geschäumte Polyurethanplatte oder geschäumte Polyisocyanuratplatte, dar.

Überraschend hat sich herausgestellt, dass mit den erfindungsgemäßen beschichteten Wärmedämmstoffkörpern, insbesondere auf Basis von geschäumten Polyisocyanurat, die Brandstoffklassen C-s2do, C-s1do, B-s1do, B-s2do oder B-s3do gemäß DIN EN 13501-1:2019-05 besitzt, bestimmt gemäß DIN EN 13823:2020-09, zugänglich sind.

Die der Erfindung zugrunde liegende Aufgabe wird des Weiteren gelöst durch ein Wärmedämmverbundsystem (WDVS) oder eine vorgehängte hinterlüftete Fassade (VHF), umfassend mindestens einen erfindungsgemäßen beschichteten Wärmedämmstoffkörper.

Die der Erfindung zugrunde liegende Aufgabe wird außerdem gelöst durch ein Gebäude enthaltend mindestens ein erfindungsgemäßes Wärmedämmverbundsystem (WDVS) oder eine erfindungsgemäße vorgehängte hinterlüftete Fassade (VHF) oder einen erfindungsgemäßen beschichteten Wärmedämmstoffkörper oder eine erfindungsgemäße Beschichtung.

Mit den erfindungsgemäßen wässrigen Zubereitungsmassen lassen sich sehr wirksame Brandschutzbeschichtungen, insbesondere für Wärmedämmstoffkörper wie Wärmedämmstoffplatten herstellen. Dies kann per Rollenauftrag, mittels Spritzens oder auch mit Hilfe einer Walze vonstattengehen.

Der vorliegenden Erfindung liegt die überraschende Erkenntnis zugrunde, dass sich mit den erfindungsgemäßen wässrigen Zubereitungsmassen ein effizienter und kostengünstiger Brandschutz für brennbare Dämmmaterialien zugänglich ist, der selbst eine Einstufung in die Brandklasse C-s2,do gemäß DIN EN 13501-1:2019-05 ("schwer entflammbar") ermöglicht. Auch gelingt es, die Rauchgastemperatur und die Rauchgasdichte zu verringern. Auf diese Weise wird der Brandschutz und damit auch die Arbeitssicherheit während der Bauphase, d.h. insbesondere im Zeitraum von der Montage der erfindungsgemäßen beschichteten Wärmedämmstoffkörper bis zum Verputzen erhöht. Die erfindungsgemäßen wässrigen Zubereitungsmassen können mit herkömmlichen Anlagen hergestellt und aufgebracht werden, so dass keine zusätzlichen Investitionen nötig sind. Auch ermöglichen die erfindungsgemäßen wässrigen Zubereitungsmassen einen kontinuierlichen Beschichtungsprozess. Außerdem können die erfindungsgemäßen beschichteten Wärmedämmstoffkörper zur Nivellierung der Oberfläche geschliffen werden, wodurch eine Nivellierung über einen Unterputz entfällt. Darüber hinaus ist es mit den erfindungsgemäßen beschichteten Wärmedämmstoffkörpern möglich, versenkbare Dübel zu verwenden. Dies wirkt späteren Abzeichnungen auf der Fassade entgegen, die durch unterschiedliche Oberflächentemperaturen ausgelöst werden. Die erfindungsgemäßen beschichteten Wärmedämmstoffkörper zeichnen sich auch dadurch aus, dass die Beschichtungen daran sehr gut haften. Überraschend wurde auch gefunden, dass es bei einseitig beschichteten Wärmedämmstoffkörpern nicht zu spannungsbedingten Verkrümmungen kommt. Zu einer verbesserten Handhabungssicherheit an der Baustelle trägt ebenfalls bei, dass die erfindungsgemäßen wässrigen Zubereitungsmassen die erfindungsgemäßen beschichteten Wärmedämmstoffkörper bereits als solche mit einem effektiven UV-Schutz ausstatten. Auch kann mit den erfindungsgemäßen wässrigen Zubereitungsmassen überraschenderweise die Menge an organischem Bindemittel sehr niedrig gehalten bzw. verringert werden, ohne dass damit Haftungsprobleme einhergehen.

Wie die nachfolgenden Beispiele belegen, verfügt eine Dämmstoffplatte, die auf der Außenseite wird mit einer erfindungsgemäßen Beschichtung ausgestattet ist, über brandhemmende Eigenschaften.

**Tabelle 1:**

| **Komponente** | **wässrige Zubereitungen** | | | |
|---|---|---|---|---|
| | A1 (Gew.-%) | A2 (Gew.-%) | A3 (Gew.-%) | A4 (Gew.-%) |
| Wasser | 10.4 | 10.4 | 4 | 4 |
| Rheologiemodifizierungsmittel | 0.4 | 0.3 | 0.4 | 0.4 |
| Kalilauge (20 %-ig) | 0.6 | 0.6 | 0.6 | 0.6 |
| Netz- und/oder Dispergiermittel | 0.8 | 0.8 | 0.8 | 0.8 |
| Wasserglas (35 %-ig) | 30 | 30 | 40 | 40 |
| calcit. Füllstoff | 14 | 14 | 10.4 | 10.4 |
| amorphes Siliziumdioxid | 3.8 | 3.8 | 3.8 | 3.8 |
| Glimmer | 10 | 10 | 10 | 10 |
| Al(OH)₃, D50=50 µm | 30 | - | 30 | - |
| Al(OH)₃, D50=2 µm | - | 7.5 | - | 7.5 |
| Al(OH)₃, D50=6 µm | - | 9,0 | - | 9,0 |
| Al(OH)₃, D50=15 µm | - | 13.5 | - | 13.5 |
| Gesamttrockengewicht | 178.62 g | 178.62 g | 178.62 g | 178.62 g |
| Verhältnis Füllstoffe + Al(OH)₃ / Wasserglas | 5.54 | 5.54 | 3.9 | 3.9 |

**Tabelle 2:**

| **Komponente** | **wässrige Zubereitungen** | | | |
|---|---|---|---|---|
| | A5 (Gew.-%) | A6 (Gew.-%) | A7 (Gew.-%) | A8 (Gew.-%) |
| Wasser | 10.4 | 10.5 | 4 | 4 |
| Rheologiemodifizierungsmittel | 0.4 | 0.3 | 0.3 | 0.4 |
| Kalilauge (20 %-ig) | 0.6 | 0.6 | 0.6 | 0.6 |
| Netz- und/oder Dispergiermittel | 0.7 | 0.7 | 0.7 | 0.7 |
| Wasserglas (35 %-ig) | 30 | 30 | 40 | 40 |
| calcit. Füllstoff | 7.9 | 7.9 | 4.4 | 4.4 |
| Titandioxid | 2 | 2 | 2 | 2 |
| Al(OH)₃, D50=50 µm | 48 | - | 48 | - |
| Al(OH)₃, D50=2 µm | - | 12 | - | 12 |
| Al(OH)₃, D50=6 µm | - | 14.4 | - | 14.4 |
| Al(OH)₃, D50=15 µm | - | 21.6 | - | 21.6 |
| Gesamttrockengewicht | 178.62 g | 178.62 g | 178.62 g | 178.62 g |
| Verhältnis Füllstoffe + | 5,54 | 5.54 | 3.9 | 3.9 |
| TiO₂ + Al(OH)₃ / Wasserglas | | | | |

Die erfindungsgemäßen wässrigen Zubereitungsmassen A1 bis A8 wurden zur Bestimmung der Haftzugfestigkeit gemäß DIN EN 13494:2002 auf einen geschäumten Polyurethan-Prüfkörper mit einer offenporigen Oberfläche mit den Maßen 20×20 cm² mit einer mittleren Trockenschichtdicke von 200 µm aufgetragen. Bei jedem Probenkörper erfolgte das Versagen innerhalb der Dämmstoffschicht und nicht etwa im Bereich der Beschichtung.

Zur Ermittlung der Brandklasse wurden mit den erfindungsgemäßen wässrigen Zubereitungsmassen A1 bis A8 beschichtete geschäumte Polyurethan-Prüfkörper (erneut mit offenporiger Oberfläche) im SBI Test (*Single Burning Item*) nach DIN EN 13823:2020-09 (Prüfungen zum Brandverhalten von Bauprodukten - Thermische Beanspruchung durch einen einzelnen brennenden Gegenstand für Bauprodukte mit Ausnahme von Bodenbelägen) untersucht. Für sämtliche Prüfkörper wurde nach der Norm DIN EN 13501-1:2019-05 die europäische Brandklasse C-s2,do erreicht. Diese Prüfkörper können folglich auch als schwer entflammbar bezeichnet werden.

Die in der voranstehenden Beschreibung und den Ansprüchen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Wässrige Zubereitungsmasse für eine brandhemmende Beschichtung, insbesondere für eine brandhemmende Beschichtung für einen Wärmedämmkörper für Gebäudewandungen, gebildet aus oder umfassend
a) partikuläres Aluminiumhydroxid,
insbesondere in einer Menge im Bereich von 15,0 bis 60,0 Gew.-%, bevorzugt 20,0 bis 57,5 Gew.-% und besonders bevorzugt 25,0 bis 52,5 Gew.- %, jeweils bezogen auf das Gesamtgewicht der Zubereitungsmasse,
wobei das Aluminiumhydroxid eine Partikelgrößenverteilung D50 im Bereich von 4 bis 100 µm, bevorzugt im Bereich von 5 bis 80 µm, besonders bevorzugt im Bereich von 7,5 bis 75 µm, und
eine Partikelgrößenverteilung D90 im Bereich von 5,0 bis 120 µm, bevorzugt im Bereich von 8,0 bis 115 µm, besonders bevorzugt im Bereich von 60 bis 110 µm, aufweist sowie
vorzugsweise eine Partikelgrößenverteilung D10 im Bereich von 0,5 bis 90 µm, bevorzugt im Bereich von 1,0 bis 60 µm, besonders bevorzugt im Bereich von 1,5 bis 50 µm, und
b) mindestens einen anorganischen Füllstoff und/oder mindestens ein anorganisches Pigment,
c) mindestens ein Netz- und/oder Dispergiermittel, insbesondere umfassend Salze von Phosphonsäuren oder Phosphonsäurederivaten,
d) Wasserglas und
e) Wasser.

2. Wässrige Zubereitungsmasse nach Anspruch 1, **gekennzeichnet durch** eine Menge (Feststoffanteil) an Wasserglas im Bereich von 4,0 bis 25,0 Gew.-%, bevorzugt im Bereich von 6,0 bis 20,0 Gew.-% und besonders bevorzugt im Bereich von 8,0 bis 15,0 Gew.-%, jeweils bezogen auf das Gesamtgewicht der Zubereitungsmasse.

3. Wässrige Zubereitungsmasse nach Anspruch 1 oder 2, ferner gebildet aus oder umfassend
f) mindestens ein organisches Bindemittel,
g) mindestens ein Rheologiemodifizierungsmittel, bevorzugt anorganisches Rheologiemodifizierungsmittel wie Schichtsilikate, besonders bevorzugt Smektit-Schichtsilikate, insbesondere ausgewählt aus der Gruppe bestehend aus Montmorillonit, Beidellit, Nontronit, Saponit und Hectorit, und/oder, insbesondere und,
h) mindestens ein Additiv.

4. Wässrige Zubereitungsmasse nach einem der vorangehenden Ansprüche, **dadurch gekennzeichnet, dass**
das partikuläre Aluminiumhydroxid Partikel mit einer Partikelgröße im Bereich von 0,1 bis 120 µm, bevorzugt Partikel mit einer Partikelgröße im Bereich von 0,2 bis 110 µm und besonders bevorzugt mit einer Partikelgröße im Bereich von 0,3 bis 100 µm, enthält oder hieraus besteht.

5. Wässrige Zubereitungsmasse nach einem der vorangehenden Ansprüche, **gekennzeichnet durch**
eine Menge an anorganischem Füllstoff im Bereich von 3,0 bis 35,0 Gew.-%, bevorzugt 4,0 bis 30,0 Gew.-%, jeweils bezogen auf das Gesamtgewicht der Zubereitungsmasse.

6. Wässrige Zubereitungsmasse nach einem der vorangehenden Ansprüche, **dadurch gekennzeichnet, dass**
das Gewichtsverhältnis der Summe aus anorganischem Füllstoff, anorganischem Pigment und Komponente a), insbesondere partikulärem Aluminiumhydroxid, zu Wasserglas (Trockengewicht) im Bereich von 2,0 bis 10, bevorzugt im Bereich von 3,0 bis 7,5; liegt.

7. Wässrige Zubereitungsmasse nach einem der vorangehenden Ansprüche, **dadurch gekennzeichnet, dass**
die Komponente a) neben partikulärem Aluminiumhydroxid ferner Magnesiumhydroxid, Ittringit, Calciumhydroxid, Titandioxidhydrat oder eine beliebige Mischung der vier vorangehend genannten Komponenten, insbesondere Magnesiumhydroxid, enthält.

8. Wässrige Zubereitungsmasse nach einem der Ansprüche 3 bis 7, **dadurch gekennzeichnet, dass**
das organische Bindemittel ein Bindemittel auf Kunstharz- oder Silikonharzbasis darstellt, wobei
der Gehalt an organischem Bindemittel (Feststoffanteil) bevorzugt im Bereich von 0,5 bis 4,0 Gew.-%, besonders bevorzugt im Bereich von 1,0 bis 3,0 Gew.-%, jeweils bezogen auf das Gesamtgewicht der Zubereitungsmasse, liegt.

9. Wässrige Zubereitungsmasse nach einem der vorangehenden Ansprüche, ferner gebildet aus oder umfassend
Calciumsulfat, insbesondere Calciumsulfat-Dihydrat und/oder Anhydrit, Kalkhydrat, Zement oder Mischungen hiervon.

10. Wässrige Zubereitungsmasse nach einem der vorangehenden Ansprüche, **dadurch gekennzeichnet, dass**
das Aluminiumhydroxid maximal 10,0 Gew.-%, bevorzugt maximal 5,0 Gew.-% und besonders bevorzugt 0 Gew.-% an Partikeln mit einer Partikelgröße größer 120 µm, bevorzugt an Partikeln mit einer Partikelgröße größer 80 µm und besonders bevorzugt an Partikeln mit einer Partikelgröße größer 50 µm aufweist, jeweils bezogen auf das Gesamtgewicht an Aluminiumhydroxid.

11. Wässrige Zubereitungsmasse nach einem der vorangehenden Ansprüche, **dadurch gekennzeichnet, dass**
das Aluminiumhydroxid Partikel mit einer Partikelgröße im Bereich von 1 bis 20 µm und im Bereich von größer 20 bis 40 µm und im Bereich von größer 40 bis 60 µm umfasst oder hieraus besteht sowie gegebenenfalls auch Partikel mit einer Partikelgröße im Bereich von größer 60 bis 80 µm und Partikel mit einer Partikelgröße im Bereich von größer 80 bis 100 µm umfasst oder hieraus besteht.

12. Beschichtung, erhalten oder erhältlich aus einer wässrigen Zubereitungsmasse nach einem der vorangehenden Ansprüche, insbesondere mit einer durchschnittlichen Trockenschichtdicke im Bereich von 50 µm bis 400 µm, besonders bevorzugt im Bereich von 70 µm bis 350 µm.

13. Beschichtung nach Anspruch 12, **dadurch gekennzeichnet, dass** der Anteil an organischen Bestandteilen, bezogen auf das Gesamtgewicht der Beschichtung, kleiner oder gleich 0,5 Gew.-% und bevorzugt kleiner oder gleich 0,1 Gew.-% ist sowie besonders bevorzugt bei 0 Gew.-% liegt.

14. Beschichtung nach Anspruch 12 oder 13, **dadurch gekennzeichnet, dass** das Aluminiumhydroxid ein Flächengewicht im Bereich von 40 bis 300 g/m², bevorzugt im Bereich von 50 bis 250 g/m², aufweist und/oder, insbesondere und, dass
das Flächengewicht an trockenem Feststoff im Bereich von 120 bis 500 g/m², bevorzugt im Bereich von 150 bis 400 g/m², liegt.

15. Beschichtung nach einem der Ansprüche 12 bis 14, **gekennzeichnet durch**
eine Pigment-Volumen-Konzentration kleiner oder gleich 92 %, ermittelt gemäß BASF Handbuch Lackiertechnik, A. Goldschmidt, H.-J. Streitberger, 2002, Vincentz Verlag.

16. Beschichteter Wärmedämmstoffkörper, insbesondere beschichtete Wärmedämmstoffplatte, umfassend
einen, insbesondere geschäumten oder extrudierten, Wärmedämmstoffkörper, insbesondere Wärmedämmstoffplatte, mit einer, insbesondere offenporigen, beschichtbaren Oberfläche sowie mindestens eine Beschichtung nach einem der Ansprüche 12 bis 15 auf dieser beschichtbaren Oberfläche, wobei der Wärmedämmstoffkörper insbesondere geschäumtes Polyurethan, geschäumtes Polyisocyanurat, geschäumtes Polystyrol, extrudiertes Polystyrol, Phenolharz, Naturdämmstoffkörper oder Kombinationen hiervon umfasst oder hieraus besteht, besonders bevorzugt geschäumtes Polyurethan und/oder Polyisocyanurat sowie ganz besonders bevorzugt geschäumtes Polyisocyanurat.

17. Beschichteter Wärmedämmstoffkörper nach Anspruch 16, **dadurch gekennzeichnet, dass**
der geschäumte Wärmedämmstoffkörper eine einseitig oder beidseitig, bevorzugt einseitig, besonders bevorzugt außenseitig, mit der Beschichtung nach einem der Ansprüche 12 bis 15 beschichtete Wärmedämmstoffplatte, insbesondere geschäumte Polyurethanplatte oder geschäumte Polyisocyanuratplatte, darstellt, wobei die beschichtete Seite der geschäumten Wärmedämmstoffplatte, insbesondere der geschäumten Polyurethanplatte oder der geschäumten Polyisocyanuratplatte, vorzugsweise eine offenporige Oberfläche aufweist.

18. Wärmedämmverbundsystem (WDVS) oder vorgehängte hinterlüftete Fassade (VHF), umfassend mindestens einen beschichteten Wärmedämmstoffkörper nach der Anspruch 16 oder 17.

19. Gebäude enthaltend mindestens ein Wärmedämmverbundsystem (WDVS) oder eine vorgehängte hinterlüftete Fassade (VHF) nach Anspruch 18 oder einen beschichteten Wärmedämmstoffkörper nach Anspruch 16 oder 17 oder eine Beschichtung nach einem der Ansprüche 12 bis 15.

20. Verwendung der wässrigen Zubereitungsmasse nach einem der Ansprüche 1 bis 11 zur Herstellung einer Brandschutzbeschichtung, insbesondere für Wärmedämmstoffkörper, insbesondere Wärmedämmstoffplatten.

21. Verwendung der Beschichtung nach einem der Ansprüche 12 bis 15 als Brandschutzbeschichtung und/oder, insbesondere und, als UV-Schutzbeschichtung.
